# FASCICULE DE BREVET EUROPEEN

(11) **EP 0 509 351 B1**
(45) Date de publication et mention de la délivrance du brevet: **06.03.1996**
(21) Numéro de dépôt: 92105845.9
(22) Date de dépôt: 04.04.1992
(51) Int. Cl.: G04C 13/11, H02K 37/14

(54) **Moteur électromagnétique à deux sens de rotation, notamment pour pièce d'horlogerie**
Elektromagnetischer Motor mit zwei Drehrichtungen, insbesondere für Zeitmessgerät
Electromagnetic motor having two rotation directions, in particular for timepiece

(30) Priorité: 19.04.1991 CH 1169/91
(43) Date de publication de la demande: 21.10.1992
(73) Titulaire: Eta SA Fabriques d'Ebauches, CH-2540 Granges (CH)
(72) Inventeur: Daho, Taghezout, CH-1006 Lausanne (CH)
(74) Mandataire: de Raemy, Jacques

(56) Documents cités:
- EP-A- 0 132 633
- FR-A- 940 059
- FR-A- 2 464 516
- MACHINE DESIGN, vol. 42, no. 29, 26 novembre 1970, pages 84-87, Cleveland, US; L.J. CHIARELLA: "Rotation by the digits with permanent-magnet stepper motors"

## Description

La présente invention concerne un moteur électromagnétique de faible puissance à deux sens de rotation susceptible de fonctionner avec un mode d'alimentation n-phasé, n étant supérieur à 1.

Plus particulièrement, l'invention concerne un tel moteur électromagnétique de petites dimensions comprenant un stator de forme essentiellement aplatie ayant n circuits magnétiques disposés de manière à définir une ouverture dans laquelle peut tourillonner un rotor pourvu par exemple d'un aimant permanent. Les circuits magnétiques sont en général découplés magnétiquement l'un de l'autre et coopèrent chacun avec le rotor par l'intermédiaire de deux pôles magnétiques statoriques placés dans des positions à peu près diamétralement opposées par rapport à l'axe de rotation du rotor, cet axe s'étendant perpendiculairement au plan général du stator. Des moteurs de ce type peuvent être utilisés avantageusement comme moteur pas-à-pas dans les montres à affichage analogique, comme cela est le cas dans la demande EP-A-0 132 633.

On connaît de la demande de brevet japonais JP 61-10958 un moteur pas-à-pas à deux sens de rotation biphasé symétrique, qui est formé de deux parties statoriques monophasées superposées l'une à l'autre et décalées angulairement de 90° l'une par rapport à l'autre.

Les deux parties statoriques monophasées sont fixées l'une à l'autre, mais se trouvent dans des plans différents. Elles sont magnétiquement isolées l'une de l'autre, tout en étant pourvues chacune d'une bobine d'excitation. Par ailleurs, chaque partie statorique définit une ouverture pour un rotor à aimant permanent qui leur est commun, les ouvertures étant alignées sur l'axe de rotation de celui-ci.

Afin de définir une position stable du rotor, le bord de chaque ouverture de ces parties statoriques est pourvu de deux encoches de positionnement qui sont diamétralement alignées sur une direction décalée de 45° par rapport à la direction principale du flux magnétique passant dans le rotor et engendrés par l'excitation de la bobine correspondante. En l'absence d'excitation la position stable du rotor est atteinte lorsque l'axe Nord-Sud de l'aimant permanent du rotor est perpendiculaire à l'axe d'alignement des encoches.

Grâce à cette construction, les deux parties statoriques travaillent exactement dans les mêmes conditions avec le rotor, cependant que, du fait de leur décalage à 90°, elles assurent chacune la rotation du rotor dans un sens qui leur est propre. Si l'on admet que le volume de l'aimant permanent du rotor traversé par chacun des deux flux magnétiques est le même, le couple moteur résultant est identique pour les deux sens de rotation.

Ce moteur connu présente plusieurs inconvénients. Tout d'abord, le volume occupé par l'aimant permanent du rotor n'est utilisé que partiellement, car chaque circuit magnétique entoure moins que la moitié de ce volume. Cet inconvénient est encore aggravé par le fait que les circuits magnétiques sont nécessairement écartés l'un de l'autre selon l'axe du rotor pour en assurer l'isolation magnétique. Il en résulte une hauteur comparativement importante ce qui est surtout gênant lorsque le moteur est utilisé dans les applications horlogères.

Un autre inconvénient réside dans le fait que les ouvertures des circuits magnétiques doivent être alignées avec précision sur l'axe du rotor, ce qui engendre des difficultés de fabrication augmentant de façon exagérée le coût du moteur.

L'invention a pour but de fournir un moteur électrique du type indiqué ci-dessus ne présentant pas ces inconvénients.

Elle a donc pour objet un moteur électromagnétique n-phasé, n étant supérieur à 1, à deux sens de rotation, ce moteur comportant :
- un stator définissant d'une part, un trou statorique et d'autre part au moins quatre pôles magnétiques, chacun de ces pôles comprenant un épanouissement polaire définissant partiellement ledit trou statorique, un bras polaire et une oreille polaire de fixation servant de contact magnétique à l'autre extrémité dudit bras polaire, lesdits épanouissements polaires étant séparés l'un de l'autre par des zones à haute réluctance magnétique formant des isthmes;
- un rotor monté rotatif autour d'un axe par rapport audit stator dans le trou de celui-ci;
- au moins deux shunts magnétiques qui relient l'un à l'autre deux desdits pôles magnétiques non-adjacents;
- des moyens montés sur chaque shunt magnétique pour engendrer dans les pôles auxquels ils sont associés un flux magnétique, chacun desdits shunts formant avec lesdits pôles magnétiques et l'aimant permanent du rotor un circuit magnétique découplé magnétiquement des autres circuits magnétiques du moteur, ce dernier étant caractérisé en ce que lesdits pôles magnétiques sont formés par les branches d'une pièce étoilée unique au centre de laquelle est prévue ledit trou statorique, lesdits épanouissements polaires étant situés dans un seul et même plan perpendiculaire à l'axe de rotation dudit rotor.

Grâce à ces caractéristiques, le moteur de la présente invention ne présente aucune difficulté particulière de fabrication ou d'assemblage. En plus, tous les circuits magnétiques du moteur embrassent le même volume de l'aimant permanent du rotor puisque tous les épanouissements polaires sont sensiblement situés dans un seul et même plan. On remarquera que cette dernière caractéristique est réalisée conjointement au découplage magnétique de chaque circuit magnétique par rapport aux autres circuits magnétiques.

L'invention sera mieux comprise à l'aide de la description qui va suivre et des dessins qui l'illustrent uniquement à titre d'exemple. Sur ces dessins :
- la figure 1 représente schématiquement un moteur pas à pas biphasé à deux sens de rotation selon l'invention;
- la figure 2 est une coupe à plus grande échelle selon la ligne II-II de la figure 1 montrant schématiquement une première variante du moteur pour obtenir un entrefer d'isolation magnétique;
- les figures 3 à 5 sont des vues en coupe respectivement de deuxième, troisième et quatrième variantes possibles du moteur suivant l'invention, notamment en vue de déterminer un entrefer;
- la figure 6 montre une vue partielle d'un autre mode de réalisation d'un moteur biphasé à deux sens de rotation selon l'invention;
- la figure 7 montre un autre mode de réalisation d'un moteur pas à pas biphasé à deux sens de rotation selon l'invention;
- les figures 8 à 11 et 13 à 16 représentent, selon un premier, respectivement un second mode de fonctionnement, des vues schématiques de l'aimant permanent bipolaire du rotor dans une position de repos et le sens de la rotation résultant de l'interaction dudit aimant avec le flux magnétique, engendré dans le stator, qui traverse cet aimant permanent;
- les figures 12 et 17 montrent schématiquement une manière selon laquelle les bobines doivent être alimentées pour commander le moteur selon ledit premier, respectivement ledit second mode de fonctionnement;
- la figure 18 représente à la même échelle que celle de la figure 1 et schématiquement un moteur triphasé à deux sens de rotation selon un autre mode de réalisation de l'invention.

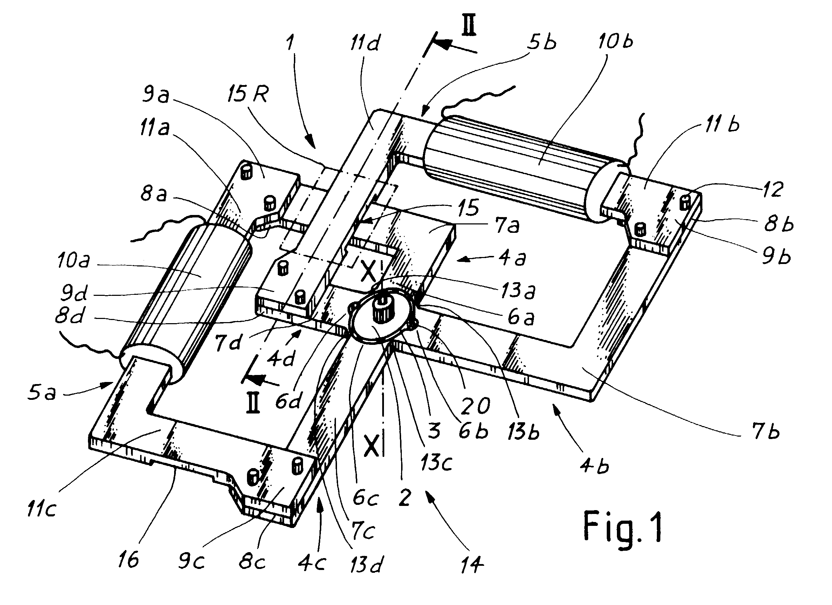

En se référant à la figure 1, on décrira ci-après un premier mode de réalisation d'un moteur électromagnétique pas à pas biphasé symétrique à deux sens de rotation selon l'invention.

Ce moteur comprend un stator 1 et un rotor 2 monté rotatif dans ledit stator dans un trou statorique 3 de forme essentiellement circulaire ménagé dans ce stator. L'axe de rotation X-X du rotor 2 est perpendiculaire au plan général du stator 1. Il est à noter que, conformément à une construction connue des spécialistes, le rotor peut être monté à rotation dans des paliers fixés dans un bâti dont est solidaire le stator, ces éléments n'étant pas représentés.

Le stator 1 comprend quatre pôles magnétiques 4a à 4d et deux shunts magnétiques 5a, 5b. Chacun de ces pôles magnétiques se termine par un épanouissement polaire 6a respectivement 6b, 6c et 6d qui détermine une partie du bord du trou statorique 3. Ces pôles magnétiques 4a à 4d se prolongent vers l'extérieur par des bras polaires 7a à 7d qui se terminent chacun par une oreille polaire 8a à 8d, servant de moyen de fixation et de contact magnétique, appliquée contre une oreille correspondante 9a à 9d appartenant respectivement aux shunts magnétiques 5a et 5b. Chacun de ces shunts porte une bobine 10a, 10b dont il constitue le noyau et dont il dépasse par des bras 11a à 11d se terminant respectivement par les oreilles 9a à 9d.

Les oreilles 8a à 8d et 9a à 9d sont respectivement réunies l'une à l'autre par des goupilles 12, d'autres moyens de fixation connus pouvant être prévus.

Pour isoler magnétiquement chaque pôle statorique de ses pôles voisins, les épanouissements polaires 6a à 6d sont reliés entre eux au moyen d'isthmes 13a à 13d qui forment des zones à haute réluctance magnétique, tout en maintenant les pôles rigidement l'un par rapport à l'autre.

On constate ainsi que la partie centrale du stator 1 définissant le trou statorique 3 et comportant les bras polaires 7a à 7d, les épanouissements 6a à 6d et les isthmes 13a à 13d forme une pièce étoilée plane unique désignée par la référence générale 14. Cette pièce présente donc ici quatre bras, chaque bras s'étendant à 90° de ses deux bras voisins à partir du trou statorique 3, deux de ces bras à savoir les bras 7a et 7b étant coudés à angle droit.

Cette configuration associe à chacun des deux circuits magnétiques deux pôles magnétiques statoriques diamétralement opposés par rapport à l'axe de rotation X-X dudit rotor 2.

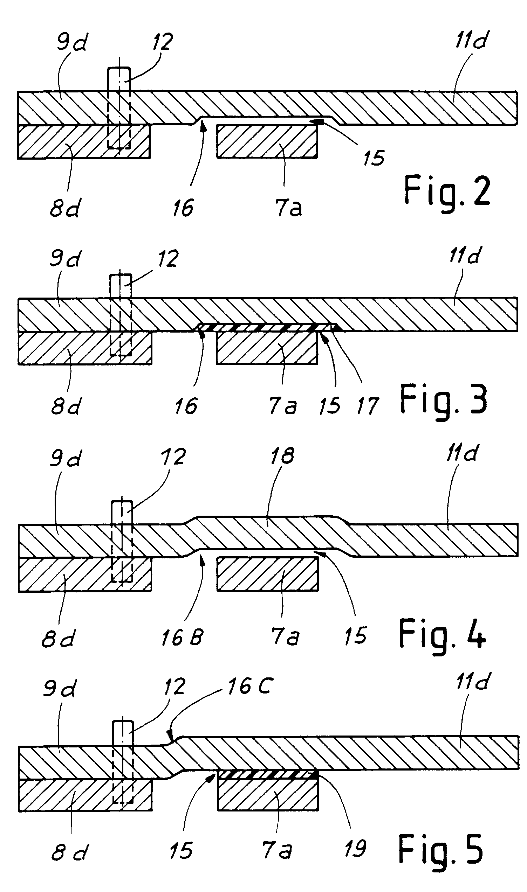

Afin d'isoler magnétiquement ces circuits magnétiques l'un de l'autre, il est prévu dans la région 15R où lesdits bras 7a et 11d se croisent en superposition, dû au fait que les deux circuits magnétiques se trouvent au moins en partie dans deux plans parallèles voisins, un entrefer d'isolation 15. Dans le mode de réalisation de la figure 1, cet entrefer est obtenu en prévoyant dans le bras coudé 11d du shunt 5b, et pour faciliter la construction de ce moteur aussi dans le bras coudé 11c du shunt 5a, une encoche 16. Celle-ci peut être obtenue par simple fraisage. Dans ce cas, l'entrefer 15 est rempli par un fluide amagnétique ambiant (voir également la figure 2).

Les figures 3 à 5 montrent trois autres variantes de réalisation de l'entrefer ménagé entre le bras 7a de la pièce étoilée 14 et 11d du shunt 5b.

Sur la figure 3, le shunt 5b comporte également une encoche 16. Cependant dans ce cas, cette encoche est remplie d'un matériau non magnétique 17, de la matière plastique par exemple, faisant office d'entretoise. Cette disposition permet d'obtenir une rigidité accrue de l'ensemble du stator, le shunt 5b n'étant plus en porte-à-faux par rapport à sa fixation sur le pôle 4d.

Comme représenté sur la figure 4, l'entrefer 15 peut également être ménagé entre le bras 7a et le shunt 5b en déformant le bras 11d de ce shunt 5b par une opération d'emboutissage. La partie déformée 18 de ce bras donne naissance à une encoche 16b.

Selon une autre variante représentée à la figure 5, le shunt 5b présente, dans sa zone de raccordement avec l'oreille 9d, une déformation 16C qui déporte dans un autre plan la majeure partie de ce shunt. Une déformation analogue (non visible sur le dessin) doit alors être prévue dans le bras 11b de ce même shunt 5b pour porter son oreille de fixation 9b au niveau approprié. Une entretoise 19 en matière amagnétique peut être prévue dans ce cas entre le bras 7a et le shunt 5b.

Il est à noter que d'autres variantes analogues ne sont pas exclues, en particulier des variantes où les encoche 16 et 16B sont prévues, non dans le bras 11d du shunt 5b, mais de manière similaire dans le bras 7a de la pièce étoilée 14.

Comme on peut le constater sur la figure 1, les shunts magnétiques 5a et 5b sont avantageusement identiques, d'où il résulte une réduction du coût de fabrication et une plus grande flexibilité pour le montage, chaque shunt portant sa bobine pouvant être utilisé indifféremment pour l'un ou l'autre des circuits magnétiques.

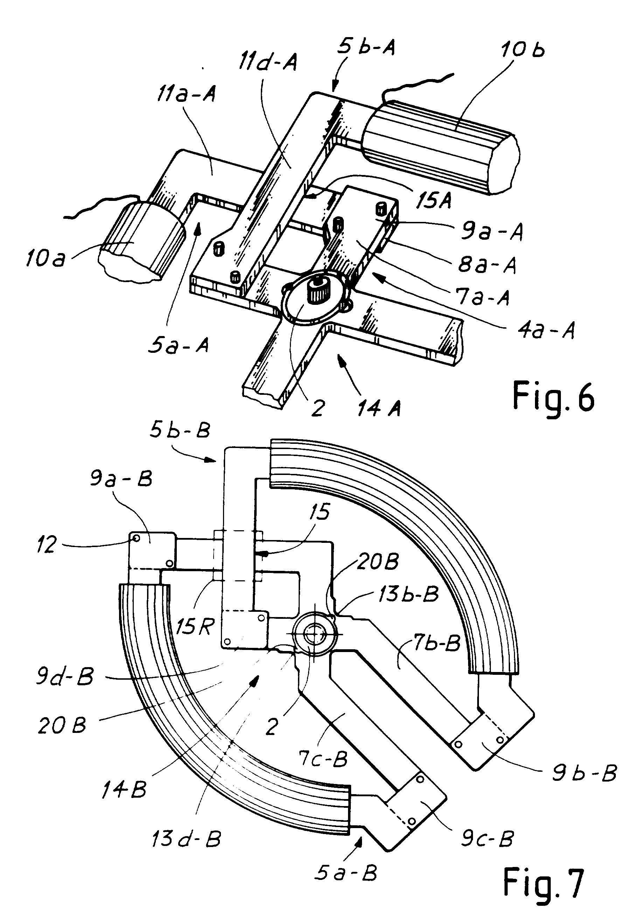

Si l'application du moteur ne requiert pas une épaisseur aussi faible que possible, comme cela peut être le cas en horlogerie, on peut envisager un stator sur trois plans parallèles. Ce mode de réalisation du moteur selon l'invention est représenté partiellement sur la figure 6. Dans ce cas, une étoile unique 14a est située dans le plan médian, tandis que des shunts 5a-A et 5b-A sont situés de part et d'autre de ce plan médian dans des plans correspondants parallèles et adjacents. Bien entendu, l'un des shunts 5a-A présente alors la forme générale d'un U dont l'un des bras 11a-A croise en superposition le bras 11d-A de l'autre shunt 5b-A. Le bras 11a-A est terminé par une oreille 8a-A, laquelle est fixée à l'oreille correspondante 9a-A.

L'entrefer 15A a alors une épaisseur sensiblement égale à l'épaisseur de la pièce étoilée 14A.

La figure 7 représente un autre mode de réalisation de l'invention permettant d'obtenir un ensemble plus compact que celui de la figure 1, et dans lequel est prévue une pièce étoilée 14B dont les bras 7b-B et 7c-B sont repliés de façon à s'étendre parallèlement l'un à l'autre à partir de leur épanouissement polaire respectif. Les parties des shunts 5a-B et 5b-B, formant les noyaux des bobines du moteur, sont alors incurvées de manière à rejoindre les points d'attache formés par les oreilles 9a-B à 9d-B correspondantes de ces shunts.

Le moteur suivant l'invention qui a été décrit ci-avant peut fonctionner principalement de deux façons différentes, à savoir en mode continu ou en mode pas à pas.

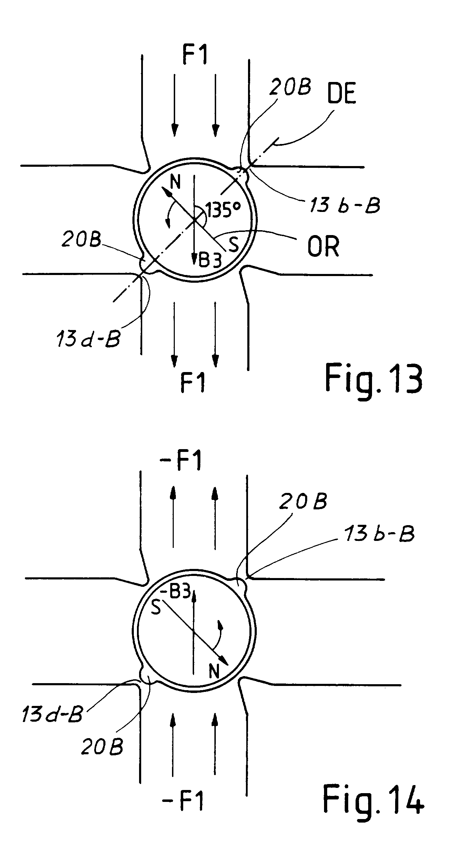

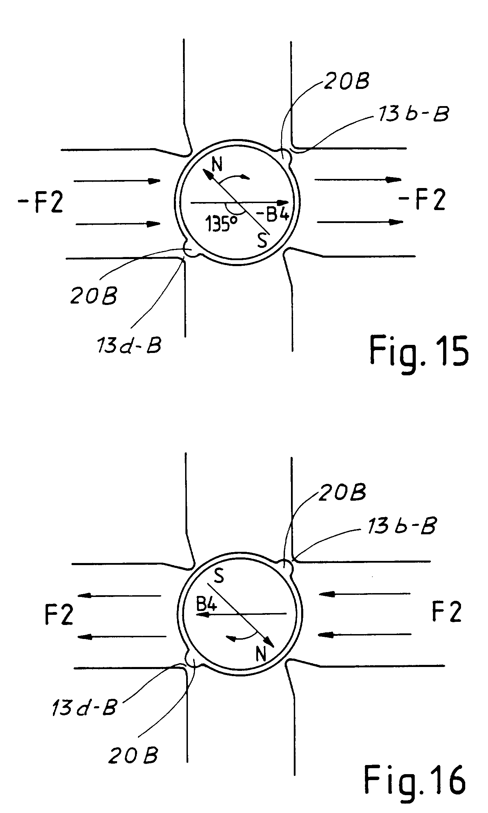

On va examiner le mode de fonctionnement pas à pas en se référant aux figures 8 à 17, les figures 8 à 11 concernant le mode de réalisation de la figure 1, tandis que les figures 13 à 16 portent sur celui de la figure 7.

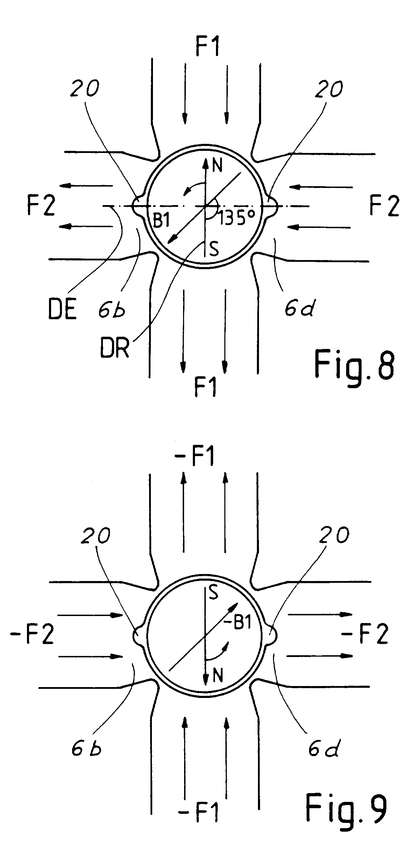

Pour pouvoir fonctionner en mode pas à pas, il est nécessaire de conférer au rotor des positions de repos stables par rapport au stator. Ceci peut être obtenu en prévoyant dans le bord du trou statorique 3 deux encoches 20, respectivement 20B, dans des positions diamétralement opposées. Dans ces conditions, comme le rotor à aimant permanent présente une direction d'aimantation donnée, il va se placer de telle manière, en l'absence d'excitation des bobines 10a et 10b, que cette direction DR (direction repos) s'oriente perpendiculairement à la direction DE (direction encoches) définie par les encoches 20 (voir figures 8 et 13).

On notera que dans le cas des figures 1 et 8 à 11, les encoches 20 sont alignées sur les épanouissements polaires 6b et 6d, tandis que dans le cas des figures 7 et 13 à 16, les encoches 20 coïncident avec deux isthmes 13b-B et 13d-B diamétralement opposés.

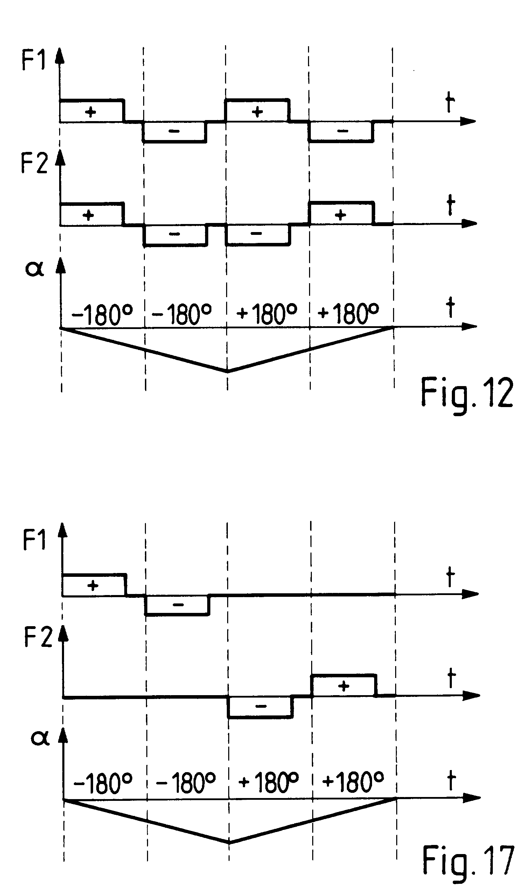

La figure 12 montre schématiquement une manière selon laquelle les bobines 10a et 10b peuvent être alimentées pour commander le moteur de la figure 1. Un pas du moteur correspond à un déplacement angulaire de 180° du rotor autour de son axe X-X.

On voit que ce déplacement se fait selon le sens (négatif) antihoraire (comme vu sur les figures 8 et 9) lorsque les bobines reçoivent par pas des impulsions de courant de même polarité, les sens des flux correspondants étant indiqués sur les figures 8 et 9 par les références ±F1 et ±F2 et les champs magnétiques résultant dans l'aimant permanent du rotor par les références ±B1.

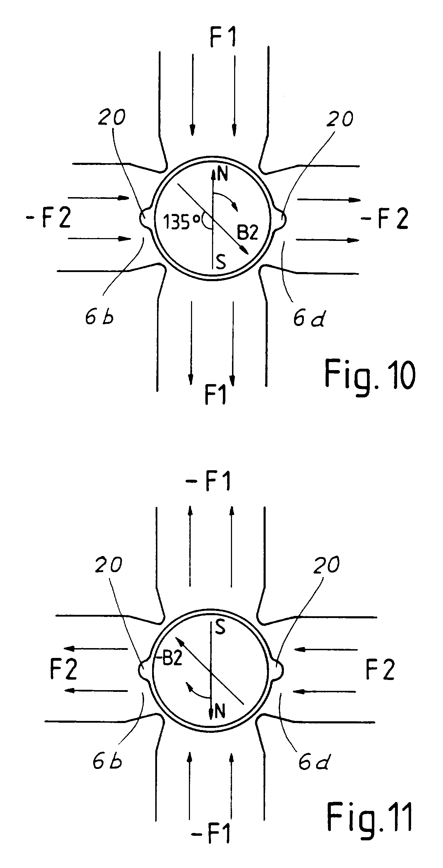

Le déplacement se fait dans le sens (positif) horaire lorsque les impulsions appliquées aux bobines 10a et 10b sont respectivement de polarités opposées (voir les figures 10 et 11), les champs magnétiques résultants sont alors ±B2.

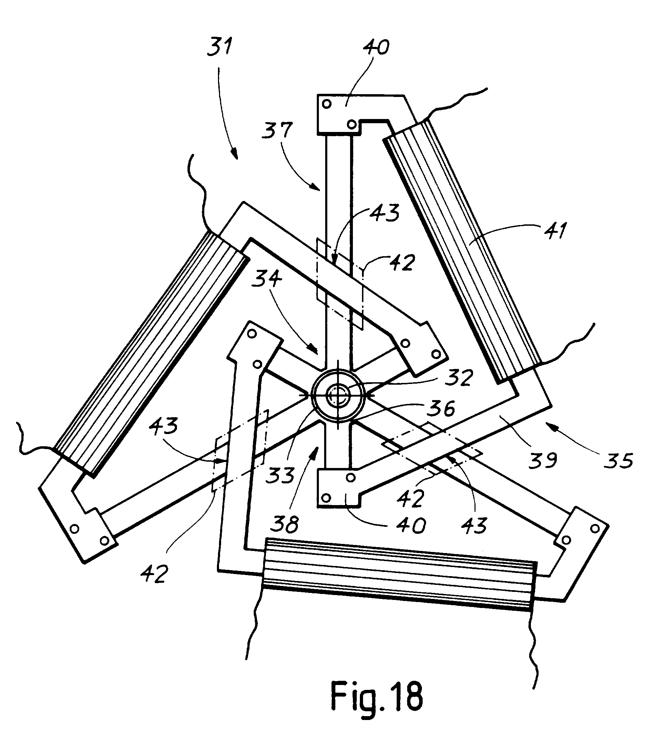

Par contre, les bobines du moteur de la figure 7 doivent être commandées conformément au schéma représenté à la figure 17, les sens des flux étant ici également indiqués par les références ±F1 et ±F2 et les champs magnétiques résultants dans l'aimant permanent du rotor par ±B3 et ±B4 sur les figures 13 à 16.

Pour le moteur de la figure 7, on voit que pour effectuer deux pas dans le sens antihoraire, on applique des impulsions de commande successivement de polarités opposées, seulement à la bobine 10a; puis pour faire deux pas dans le sens horaire, c'est la bobine 10b qui reçoit successivement deux impulsions de polarités opposées.

Les moteurs, tant de la figure 1 que de la figure 7, ont des pièces centrales 14 et 14B dont chaque isthme à haute réluctance est orienté à 90° des deux isthmes voisins.

Par ailleurs, la position relative des encoches de positionnement 20 par rapport aux épanouissements polaires, telle qu'elle est représentée dans les figures 1 et 7 respectivement, permet un fonctionnement du moteur rigoureusement identique, quel que soit le sens de rotation moyennant une commande à l'aide d'impulsions de courant également identiques, abstraction faite de leur polarité. Ceci conduit également à une identité de performances pour les deux sens de rotation. Il est donc possible de commander et d'asservir de tels moteurs, de manière optimale pour les deux sens de rotation, en utilisant un seul niveau de tension, ce qui est très avantageux.

La figure 18 représente un autre mode de réalisation de l'invention qui constitue un moteur triphasé.

Ce moteur comprend un stator 31 définissant un trou statorique 33 dans lequel est monté rotatif un rotor 32 à aimant permanent bipolaire.

Le stator comprend une pièce centrale unique étoilée 34 au centre de laquelle est prévu le trou statorique 33.

Pour chaque phase du moteur, le stator comprend un circuit magnétique 35 découplé magnétiquement des autres circuits magnétiques par des isthmes 36.

Chaque circuit magnétique comprend :
- une branche longue 37 appartenant à un pôle de la pièce étoilée;
- une branche courte 38 appartenant à un autre pôle de celle-ci située dans une position diamétralement opposée;
- un shunt magnétique 39, en forme de C, fixé par des oreilles 40 à des oreilles correspondantes (non visibles sur le dessin) prévues aux extrémités libres des branches 37 et 38 de la pièce étoilée 34;
- une bobine 41 montée sur le shunt magnétique 39.

Dans ce moteur, il y a trois régions de croisement en superposition 42 dans lesquelles est prévu un entrefer 43 pour isoler magnétiquement les circuits magnétiques concernés. Cet entrefer peut être obtenu d'une façon analogue à celles représentées respectivement par les figures 2 à 4.

On notera que les circuits magnétiques de ce moteur, appartenant respectivement à ses trois phases, sont de construction identique, chaque circuit étant décalé de 120° par rapport aux deux circuits adjacents.

Ce moteur triphasé est représenté sur la figure 18 sans encoche de positionnement; cependant il est tout à fait possible de prévoir des encoches de positionnement appropriés à un mode de fonctionnement pas à pas. Tout comme pour le moteur biphasé considéré ci-avant, ce moteur peut fonctionner selon un mode continu ou selon un mode pas-à-pas.

## Revendications

1. Moteur électromagnétique n-phasé, n étant supérieur à 1, à deux sens de rotation, ce moteur comportant :
- un stator (1; 31) définissant d'une part, un trou statorique (3; 33) et d'autre part au moins quatre pôles magnétiques (4a à 4d; 37 ,38), chacun de ces pôles comprenant un épanouissement polaire (6a à 6d respectivement) définissant partiellement ledit trou statorique, un bras polaire (7a à 7d respectivement) qui prolonge ledit épanouissement et une oreille polaire de fixation (8a à 8d respectivement) servant de contact magnétique à l'extrémité dudit bras polaire, lesdits épanouissements polaires étant séparés l'un de l'autre par des zones à haute réluctance magnétique formant des isthmes (13a à 13d; 13b-B, 13d-B; 36);
- un rotor à aimant permanent (2; 32) monté rotatif autour d'un axe par rapport audit stator dans le trou de celui-ci;
- au moins deux shunts magnétiques (5a, 5b; 5a-A, 5b-A; 5a-B, 5b-B; 39) qui relient l'un à l'autre deux desdits pôles magnétiques non-adjacents (4a, 4c, respectivement 4b, 4d; 37, 38);
- des moyens (10a, 10b; 41) montés sur chaque shunt magnétique pour engendrer dans les pôles auxquels ils sont associés un flux magnétique (±F1, ±F2 respectivement);
chacun desdits shunts formant avec lesdits pôles magnétiques et l'aimant permanent du rotor (2, 32) un circuit magnétique découplé magnétiquement des autre circuits magnétiques du moteur,
ce dernier étant caractérisé en ce que lesdits pôles magnétiques sont formés par les branches d'une pièce étoilée unique (14; respectivement 14A; 14B; 34) au centre de laquelle est prévu ledit trou statorique (3, 33), lesdits épanouissements polaires (6a à 6d) étant situés dans un seul et même plan perpendiculaire à l'axe de rotation (X-X) dudit rotor.

2. Moteur selon la revendication 1, caractérisé en ce que la totalité de ladite pièce étoilée unique (14; respectivement 14A; 14B; 34) du stator s'étend essentiellement dans un seul et même plan.

3. Moteur selon la revendication 1 ou 2, caractérisé en ce que ledit stator est situé essentiellement sur deux plans parallèles voisins et perpendiculaires audit axe de rotation du rotor, chaque circuit magnétique du moteur ayant au moins un croisement en superposition avec respectivement au moins un autre desdits circuits magnétiques, chaque croisement en superposition survenant entre un bras (11d) du shunt (5b) d'un premier circuit magnétique avec un bras polaire (7a) de la pièce étoilée unique (14), ce dernier bras appartenant à un deuxième circuit magnétique concerné, l'isolation magnétique dans la région (15R, 42) dudit croisement en superposition étant assurée par un entrefer (15, 43).

4. Moteur selon la revendication 3, caractérisé en ce qu'une encoche (16), usinée dans ledit bras (11d) dudit shunt (5b) dudit premier circuit magnétique ou dans ledit bras polaire (7a) dudit deuxième circuit magnétique, définit dans ladite région de croisement en superposition ledit entrefer (15, 43).

5. Moteur selon la revendication 3, caractérisé en ce qu'une partie (18) emboutie dans ledit bras (11d) dudit shunt (5b) dudit premier circuit magnétique, ou dans ledit bras polaire (7a) dudit deuxième circuit magnétique, forme une encoche (16B) dans ladite région de croisement en superposition, cette encoche définissant ledit entrefer (15, 43).

6. Moteur selon la revendication 3, caractérisé en ce qu'il est biphasé et que les oreilles (9b, 9d) dudit shunt (5b) dudit premier circuit magnétique sont embouties de manière à déporter dans un plan voisin le reste de ce shunt, ce qui définit ledit entrefer (15).

7. Moteur selon la revendication 1 ou 2, caractérisé en ce qu'il est biphasé et en ce que ledit stator est situé essentiellement sur trois plans parallèles voisins et perpendiculaires à l'axe du rotor (X-X), la pièce étoilée unique (14A) étant située dans le plan médian, tandis que lesdits shunts (5a-A, 5b-A) sont situés de part et d'autre de ce plan médian, lesdits circuits magnétiques étant isolés magnétiquement l'un de l'autre au moyen d'un entrefer (15A) situé entre un bras (11a-A) d'un des deux shunts (5a-A) et un bras (11d-A) de l'autre (5b-A) des deux shunts, l'entrefer ayant l'épaisseur de ladite pièce étoilée unique.

8. Moteur selon l'une quelconque des revendications 1 à 7, caractérisé en ce qu'il est biphasé, et en ce que le trou statorique (3) est essentiellement circulaire, chacun desdits isthmes d'isolation magnétique formant avec les deux isthmes adjacents un angle au centre sensiblement de 90°.

9. Moteur selon la revendication 8, caractérisé en ce que deux encoches de positionnement (20, 20B) du rotor (2) sont prévues sur le bord dudit trou statorique (3) dans des positions diamétralement opposées par rapport au centre dudit trou statorique.

10. Moteur selon la revendication 9, caractérisé en ce que les encoches de positionnement (20) sont alignées selon une direction définie par deux épanouissement polaires non-adjacentes (6b, 6d).

11. Moteur selon la revendication 9, caractérisé en ce que les encoches de positionnement (20B) sont alignées selon une direction définie par deux isthmes non-adjacents (13b-B, 13d-B).

12. Moteur selon l'une quelconque des revendications 1 à 5, caractérisé en ce qu'il est triphasé et en ce que ladite pièce étoilée unique (34) présente six branches, chacune de ces branches étant environ décalée angulairement de 60° par rapport aux deux branches qui lui sont adjacentes, chaque circuit magnétique (35) ayant une seule région de croisement en superposition (42) dans laquelle, l'isolation magnétique entre les circuits est assurée par un entrefer (43).

13. Moteur selon l'une quelconque des revendications 3 à 7, 12 caractérisé en ce que l'entrefer est rempli par une matière solide amagnétique (17, 19).

14. Moteur selon la revendication 12, caractérisé en ce que des encoches de positionnement du rotor (32) sont prévues sur le bord dudit trou statorique (33).

15. Moteur selon l'une quelconque des revendications 1 à 14, caractérisé en ce que lesdits shunts magnétiques (5a, 5b; 39) sont identiques.

## Patentansprüche

1. N-phasiger elektromagnetischer Motor, wobei n größer als 1 ist, mit zwei Drehrichtungen, welcher Motor umfaßt:
- einen Stator (1; 31), der einerseits ein Statorloch (3; 33) begrenzt und andererseits mindestens vier Magnetpole (4a bis 4d; 27, 38), wobei jeder dieser Pole einen Polschuh (6a bis 6d) umfaßt, der teilweise das Statorloch begrenzt, mit einem Polarm (7a bis 7d), der den Polschuh verlängert und ein Polbefestigungsauge (8a bis 8d), das als magnetischer Kontakt am Ende des Polarms dient, welche Polschuhe voneinander durch Zonen hoher magnetischer Reluktanz getrennt sind, welche Isthmen (13a bis 13d; 13b-B, 13d-B; 36) bilden;
- einen Rotor mit Permanentmagnet (2; 32), drehbeweglich um eine Achse relativ zu dem Stator in dem Loch desselben angeordnet;
- mindestens zwei magnetische Nebenschlüsse (5a, 5b; 5a-A, 5b-A; 5a-B, 5b-B; 39), welche zwei der genannten nicht benachbarten Magnetpole (4a, 4c bzw. 4b, 4d; 37, 38) miteinander verbinden;
- Mittel (10a, 10b; 41), die auf jedem magnetischen Nebenschluß angeordnet sind zum Erzeugen eines Magnetflusses (± Fl, ± F2) in den ihnen zugeordneten Polen,
wobei jeder der Nebenschlüsse mit den Magnetpolen und dem Permanentmagneten des Rotors (2, 32) einen Magnetkreis bildet, der magnetisch von den anderen Magnetkreisen des Motors entkoppelt ist,
wobei dieser letztere dadurch gekennzeichnet ist, daß die Magnetpole von Armen eines einzigen sternförmigen Teils (14 bzw. 14A; 14B; 34) gebildet sind, in deren Zentrum das Statorloch (3, 33) vorgesehen ist, wobei die Polschuhe (6a bis 6d) sich in ein- und derselben Ebene senkrecht zur Drehachse (X-X) des Rotors befinden.

2. Motor nach Anspruch 1, dadurch gekennzeichnet, daß die Gesamtheit des einzigen sternförmigen Teils (14; bzw. 17A; 14B; 34) des Stators sich im wesentlichen in ein- und derselben Ebene erstreckt.

3. Motor nach Anspruch 1 oder 2, dadurch gekennzeichnet, daß der Stator sich im wesentlichen in zwei parallelen, benachbarten und senkrecht zur Drehachse des Rotors verlaufenden Ebenen befindet, wobei jeder Magnetkreis des Motors mindestens eine Kreuzung mit Überlagerung mit mindestens einem anderen der Magnetkreise aufweist, wobei jede Überlagerungskreuzung zwischen einem Arm (11d) des Nebenschlusses (5b) eines ersten Magnetkreises mit einem Polarm (7a) des einzigen sternförmigen Teils (14) hervorgeht, welcher letztere Arm zu einem zweiten betroffenen Magnetkreis gehört, wobei die magnetische Isolation in dem Bereich (15R, 42) der Überlagerungskreuzung durch einen Luftspalt (15, 43) sichergestellt ist.

4. Motor nach Anspruch 3, dadurch gekennzeichnet, daß ein Einschnitt (16), eingearbeitet in den Arm (11d) des Nebenschlusses (5b) des ersten Magnetkreises oder in dem Polarm des zweiten Magnetkreises in dem Bereich der Überlagerungskreuzung den Luftspalt (15, 43) begrenzt.

5. Motor nach Anspruch 3, dadurch gekennzeichnet, daß eine in den Arm (11d) des Nebenschlusses (5b) des ersten Magnetkreises oder in den Polarm (7a) des zweiten Magnetkreises eingeprägte Partie (18) eine Ausnehmung (16B) in dem Bereich der Überlagerungskreuzung bildet, welche Ausnehmung den Luftspalt (15, 43) begrenzt.

6. Motor nach Anspruch 3, dadurch gekennzeichnet, daß er zweiphasig ist und daß die Augen (9b, 9d) des Nebenschlusses (5b) des ersten Magnetkreises derart eingeprägt sind, daß sie in eine dem Rest dieses Nebenschlusses benachbarte Ebene ragen, was den Luftspalt (15) begrenzt.

7. Motor nach Anspruch 1 oder 2, dadurch gekennzeichnet, daß er zweiphasig ist und daß der Stator sich im wesentlichen in drei parallelen, benachbarten und senkrecht zur Rotorachse (X-X) verlaufenden Ebene befindet, wobei sich das einzige sternförmige Teil (14A) in der mittleren Ebene befindet, während die Nebenschlüsse (5a-A, 5b-A) sich beidseits dieser mittleren Ebene befinden, wobei die Magnetkreise magnetisch voneinander isoliert sind mittels eines Luftspalts (15A), der sich in einem Arm (11a-A) eines der beiden Nebenschlüsse (5a-A) und eines Arms (11d-A) des anderen (5b-A) der beiden Nebenschlüsse befindet, wobei der Luftspalt die Höhe des einzigen sternförmigen Teils aufweist.

8. Motor nach einem der Ansprüche 1 bis 7, dadurch gekennzeichnet, daß er zweiphasig ist und daß das Statorloch (3) im wesentlichen kreisrund ist, wobei jeder der Magnetisolationsisthmen mit den beiden benachbarten Isthmen einen Winkel bezüglich des Zentrums im wesentlichen von 90° bildet.

9. Motor nach Anspruch 8, dadurch gekennzeichnet, daß zwei Positionierausnehmungen (20, 20B) des Rotors (2) an dem Rand des Statorlochs (3) in diametral gegenüberliegenden Positionen bezüglich des Zentrums des Statorlochs vorgesehen sind.

10. Motor nach Anspruch 9, dadurch gekennzeichnet, daß die Positionierausnehmungen (20) gemäß einer Richtung ausgefluchtet sind, die definiert ist durch zwei nicht benachbarte Polschuhe (6b, 6d).

11. Motor nach Anspruch 9, dadurch gekennzeichnet, daß die Positionierausnehmungen (20B) gemäß einer Richtung ausgefluchtet sind, definiert durch die zwei nicht benachbarten Isthmen (13b-B, 13d-B).

12. Motor nach einem der Ansprüche 1 bis 5, dadurch gekennzeichnet, daß er dreiphasig ist und daß das einzige sternförmige Teil (34) sechs Arme aufweist, wobei jeder dieser Arme in Winkelrichtung um etwa 60° bezüglich zwei ihm benachbarten Armen versetzt ist, wobei jeder Magnetkreis (35) eine einzige überlagerungskreuzung (42) besitzt, in der die magnetische Isolation der Kreise durch einen Luftspalt (43) sichergestellt ist.

13. Motor nach einem der Ansprüche 3 bis 7, 12, dadurch gekennzeichnet, daß der Luftspalt mit einem festen, nicht magnetischen Material (17, 19) gefüllt ist.

14. Motor nach Anspruch 12, dadurch gekennzeichnet, daß Positionierausnehmungen des Rotors (32) auf dem Rand des Statorlochs (33) vorgesehen sind.

15. Motor nach einem der Ansprüche 1 bis 14, dadurch gekennzeichnet, daß die magnetischen Nebenschlüsse (5a, 5b; 39) identisch sind.

## Claims

1. Electromagnetic motor of n phases, n being greater than 1, having two senses of rotation, such motor including :
- a stator (1; 31) defining on the one hand a stator cavity (3; 33) and on the other hand at least four magnetic poles (4a to 4d; 37, 38), each of such poles comprising a polar expansion (respectively 6a to 6d) partially defining said stator cavity, a polar arm (respectively 7a to 7d) which extends said expansion and a polar attachment lug (respectively 8a to 8d) serving as magnetic contact at the end of said polar arm, said polar expansions being separated from one another by high magnetic reluctance zones forming necks (13a to 13d; 13b-B; 13d-B; 36);
- a permanent magnet rotor (2; 32) mounted in the stator cavity to rotate relative to said stator around an axis;
- at least two magnetic shunts (5a, 5b; 5a-A, 5b-A; 5a-B, 5b-B; 39) which couple two non-adjacent magnetic poles (4a, 4c, respectively 4b, 4d; 37, 38);
- - means (10a, 10b; 41) mounted on each magnetic shunt for generating a magnetic flux (respectively ±F1, ±F2) in the poles with which they are associated;
each of said shunts forming, with said magnetic poles and the permanent magnet of the rotor (2, 32), a magnetic circuit which is magnetically decoupled from the other magnetic circuits of the motor,
the latter being characterized in that said magnetic poles are formed by the branches of a single star-shaped piece (14; respectively 14A; 14B; 34) in the center of which said stator cavity (3, 33) is provided, said polar expansions (6a to 6d) being situated in a single and common plane perpendicular to the rotation axis (X-X) of said rotor.

2. Motor according to claim 1, characterized in that the totality of said single star-shaped piece (14; respectively 14A; 14B; 34) for the stator extends in a single and common plane.

3. Motor according to claim 1 or 2, characterized in that said stator is situated essentially on two adjacent parallel planes perpendicular to said rotor axis, each magnetic circuit of the motor having at least one intersection in superposition respectively with at least one other of said magnetic circuits, each superposed intersection occurring between the arm (11d) of the shunt (5b) of a first magnetic circuit and a polar arm (7a) of the single star-shaped piece (14), such latter arm belonging to a second affected magnetic circuit, the magnetic insulation in the region (15R, 42) of said superposed intersection being assured by a gap (15, 43).

4. Motor according to claim 3, characterized in that a recess (16), machined in said arm (11d) of said shunt (5b) of said first magnetic circuit or in said polar arm (7a) of said second magnetic circuit, defines said gap (15, 43) in said region of said superposed intersection.

5. Motor according to claim 3, characterized in that a swaged portion (18) in said arm (11d) of said shunt (5b) of said first magnetic circuit or in said polar arm (7a) of said second magnetic circuit forms a recess (16B) in said region of superposed intersection, such recess defining said gap (15, 43).

6. Motor according to claim 3, characterized in that it is a two-phase motor and that the lugs (9b, 9d) of said shunt (5b) of said first magnetic circuit are swaged in a manner to offset the remainder of such shunt into a neighbouring plane which defines said gap (15).

7. Motor according to claim 1 or 2, characterized in that it is a two-phase motor and in that said stator is situated essentially on three neighbouring parallel planes perpendicular to the rotor axis (X-X), the single star-shaped piece (14A) being situated in the median plane while said shunts (5a-A, 5b-B) are situated on either side of such median plane, said magnetic circuit being magnetically insulated from one another by means of a gap (15A) situated between an arm (11a-A) of one (5a-A) of the two shunts and an arm (11d-A) of the other (5b-A) of the two shunts, the gap depth being the thickness of said single star-shaped piece.

8. Motor according to any one of claims 1 to 7, characterized in that it is a two-phase motor and in that the stator cavity (3) is essentially circular, each of said magnetic insulating necks forming with the two adjacent necks a central angle of substantially 90°.

9. Motor according to claim 8, characterized in that two positioning notches (20, 20B) of the rotor (2) are provided on the edge of said stator cavity (3) in positions which are diametrally opposite relative to the center of said stator cavity.

10. Motor according to claim 9, characterized in that the positioning notches (20) are aligned along a direction defined by two non-adjacent polar expansions (6b, 6d).

11. Motor according to claim 9, characterized in that the positioning notches (20b) are aligned along a direction defined by two non-adjacent necks (13b-B, 13d-B).

12. Motor according to any one claims 1 to 5, characterized in that it is a three-phase motor and in that said single star-shaped piece (34) exhibits six branches, each of such branches being roughly angularly offset by 60° adjacent thereto, each magnetic circuit (35) having a single region of superposed intersection (42) in which the magnetic insulation between the circuits is assured by a gap (43).

13. Motor according to any one of claims 3 to 7, 12, characterized in that the gap is filled in with a solid nonmagnetic material (17, 19).

14. Motor according to claim 12, characterized in that rotor positioning notches (32) are procided on the edge of said stator cavity (33).

15. Motor according to any one of claims 1 to 14, characterized in that said magnetic shunts (5a, 5b; 39) are identical to one another.
